# EUROPEAN PATENT APPLICATION

(11) **EP 1 560 111 A1**
(43) Date of publication of application: **03.08.2005**
(21) Application number: 05100231.9
(22) Date of filing: 17.01.2005
(51) Int. Cl.: G06F 9/30, G06F 15/80, G06F 17/16

(54) **Method for managing data in an array processor and array processor carrying out this method**

(30) Priority: 21.01.2004 FR 0400527
(71) Applicant: Thomson Licensing S.A., 92100 Boulogne Billancourt (FR)
(72) Inventor: De Lescure, Benoît External, 35000 RENNES (FR); Plissonneau Frédéric CF Research and Innovation IC, 35235 Thorigné-Fouillard (FR)
(74) Representative: Berthier, Karine

(57) **Abstract**

The invention relates to a data management method in an array processor containing elementary processors (302 (i,j)) forming an array (300) of n axes such that an elementary processor (302 (i,j)) is connected to a neighboring elementary processor (302 (i',j')) according to each of the 2n directions (310, 312, 314, 316) of the array (300), and controlled by identical instruction cycles determining the neighboring elementary processor (302 (i',j')) that should send the data to the neighboring elementary processor (302 (i',j')) for a subsequent cycle. According to the method, we associate to this elementary processor (302 (i,j)) communication registers (X1, X2, Y1, Y2) dedicated to data exchange according to each axis of the array (300) and we integrate in the instructions a condition of location of the elementary processor (302 (i,j)) in the array (300) to determine the neighboring processor (302 (i',j')) sending the data for a subsequent cycle.

## Description

The present invention relates to a data management method in an array processor and to an array processor implementing this method, particularly to accelerate the transmission of data within this array processor.

It is known to increase the computing power of electronic equipment by using multiple processors operating in parallel, i.e. simultaneously, to manage complex computing tasks.

Thus, several processors in an electronic system share a part of the operations to be implemented by this system to improve the system's global operation time, such distribution is particularly important for electronic systems managing significant data flows in real-time, such as, for example, multimedia data (images, video, etc.).

Array processors are processors that contain a group of processors, called elementary processors or EP, which implement parallel data processing operations. These elementary processors are physically arranged in the form of an array that can be one-dimensional, in the form of an alignment of elementary processors for example, or two-dimensional, for example, when the elementary processors are arranged in the form of a rectangular array where EPs are localized in a regular manner.

In this latter case, each elementary processor can send and receive data per operation cycle - a cycle being determined by the clock that regulates the system - as regards one of its neighboring elementary processors according to four directions, North, South, East and West described hereafter, via a mesh communication network connecting the elementary processors in the array.

Moreover, when an elementary processor is at an edge of the array according to a given direction, it is also called a "bypassed" neighbor according to this given direction to the elementary processor situated at the edge of the array at the opposite of this direction, to which it is thus connected.

It should also be noted that each elementary processor has an elementary memory unit in which it stores the data being processed that can be sent, or not, to a neighboring elementary processor at the next cycle.

Array processors also contain control means responsible, amongst other things, for:
- managing the instructions of the programs executed by the array processor,
- sending instructions to the elementary processors such that the corresponding operations are executed by these elementary processors,
- executing instructions for transferring data within the array processor, for example between elementary processors.

A particular example of an array processor is an SIMD (Single Instruction Multiple Data) type array processor, within which all the elementary processors implement the same data processing function for different data that the processors have stored in their memory.

In other words, there is a functional homogeneity of elementary processors, which differ only as regards their position in the array and the data saved to their memory.

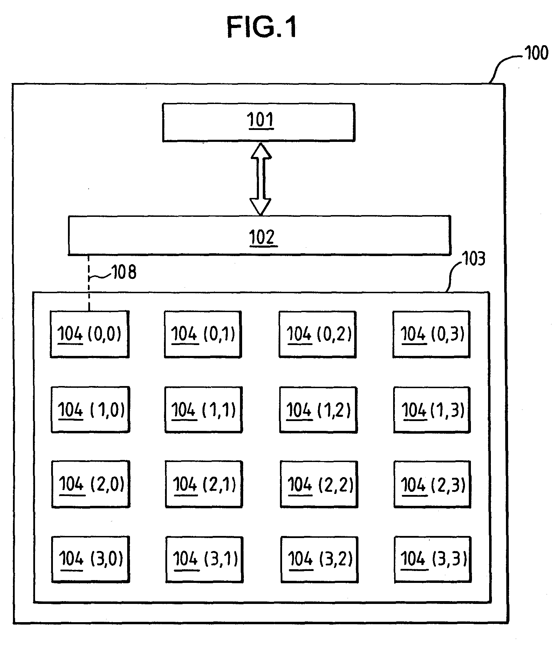

Figure 1 is a diagram that illustrates some elements of an array processor 100 as an array of elementary processors. In this example, the array 103 is two-dimensional 4x4 with 16 elementary processors 104 (i, j) such that i and j are between 0 and 3.

Each elementary processor EP is connected to control means 102 by communication links 108, even though, for clarity, only the connection between the EP 104 (0,0) and the control means 102 is shown in figure 1. These control means execute, amongst other functions, a program or programs stored in the program memory 101.

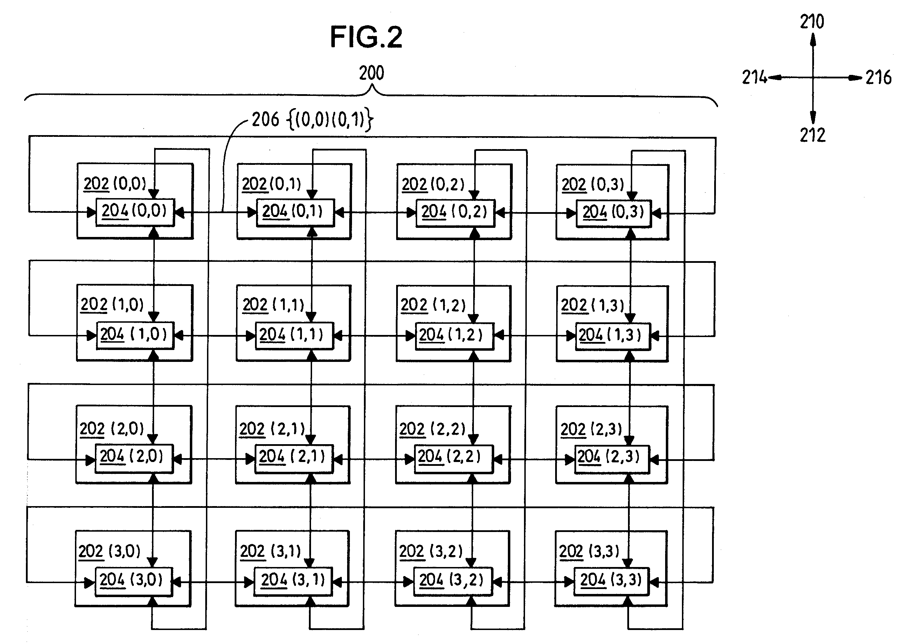

Figure 2 schematically represents an example of an array 200 of elementary processors 200 (i,j), i and j lying between 0 and 3, for a dimension of 4x4, that are connected to each other by a mesh communication network between the different elementary processors.

Each elementary processor 202(i,j) has an internal communication register 204(i,j) where the data to be sent by this processor at each operation cycle are saved.

Furthermore, these elementary processors EP 202 (i,j) are connected to each other by communication links 206 {(i,j)(n,m)}, i, j, n and m lying between 0 and 3, of a mesh network connecting the elementary processor 202(i,j) to the physical neighboring elementary processor 202(n,m) or by bypassing as defined below. For clarity, only the link 206{(0,0) (0,1)} is referenced in figure 2.

Each elementary processor is thus connected to 4 other elementary processors by the mesh communication network in the 4 possible directions (North 210, South 212, West 214 and East 216). For example, the elementary processor 202(0,0) is connected to:
- the elementary processor 202(1,0) in the direction South 212,
- the elementary processor 202 (0,1) in the direction East 216,
- the elementary processor 204(0,3), neighbor by bypassing, in the direction West 214,
- the elementary processor 204(3.0), neighbor by bypassing, in the direction North 210.

This type of array processor is specially adapted for moving data between elementary processors at each clock cycle for algorithms that set uniform data movements, particularly for video image processing algorithms. Indeed, it includes several advantages, such as:
- Simplicity of the data transmission command in the array (displacement to the North, South, East or West) given that, for the same command, all the elementary processors send the data according to the same direction, and
- Brief connections between the elementary processors, which allow forecasting for example the times associated to the electric signals, these times being also brief as a result.

The present invention is however the result of the observation that an array processor according to prior art experiences difficulties in managing communications between the elementary processors.

As a result, it is not possible for the control means to command irregular data moves, that is distinct moves between two elementary processors, as the instructions must be uniform as regards data movements for all the elementary processors.

Furthermore, numerous cycles may be required to send data when this data is requested or sent from elementary processors situated at the edge of the array due to a "side effect". This effect is more significant where the quantity of elementary processors on the edge of the array is high in relation to the total number of elementary processors. For example, the side effect is more significant for a 4x4 array than for a 128x128 array.

The present invention aims to overcome at least one of the problems described above. The invention relates to a method for managing data in an array processor containing elementary processors, forming an array of n axes such that each elementary processor is connected to neighboring elementary processors according to each of the 2n directions of the array, each elementary processor being controlled by identical instructions determining the neighboring elementary processor that should send data to this elementary processor for a subsequent cycle, characterized in that communication registers dedicated to data exchange according to each axis of the array are associated with this elementary processor and in that a condition of location of the elementary processor in the array is integrated in each instruction to determine the neighboring elementary processor sending the data taken into account at a subsequent cycle.

Thanks to the invention, efficiency of algorithm execution by SIMD type array processors is considerably improved, e.g. for video image processing. Indeed, the invention obtains different processing for each elementary processor according to their position in the array from the same uniform communication instruction sent by the control means of the SIMD array processor.

Hence, a method according to the invention optimizes data transfer from a first elementary processor to a second elementary processor via the optimum route in the internal network of the array processor, and in particular does so without "side effects".

The invention also relates to array processor comprising elementary processors, forming an array of n axes such that each elementary processor is connected to neighboring elementary processors according to each of the 2n directions of the array, each elementary processor being controlled by identical instructions determining the neighboring elementary processor that should send data to this elementary processor for a subsequent cycle, characterized in that each elementary processor contains communication registers dedicated to data exchange according to each axis of the array, and in that each elementary processor is able to receive from control means instructions containing a condition of location of the elementary processor in the array to determine the data to be sent to each of its communication register for a subsequent cycle.

In one embodiment, each elementary processor is assigned a series of bits identifying its position in the array so as to determine the location of the elementary processor by comparing this series of bits with a series of bits received in the instructions.

According to one embodiment, the series of bits identifying the position of an elementary processor in the array is a series of 2n bits indicating, for each elementary processor, whether this elementary processor is at an edge of the array.

In one embodiment, the array comprises two axes and four directions.

According to one embodiment, each elementary processor is assigned four electrical elements whose voltage is set when the elementary processor is enabled and remains set while the elementary processor is enabled. The voltage of these four elements provides the series of bits indicating the position of the elementary processor in the array.

In one embodiment, the instructions received from the control means contain a first identity of an elementary processor whose data should be copied into a communication register of the elementary processor if the location condition is validated, and a second identity of an elementary processor whose data should be copied if the location condition is not validated.

According to one embodiment, the communication registers of each elementary processor are independent.

In one embodiment, each elementary processors contains at least two communication registers dedicated to data exchange according to an axis of the array such that, according to this axis, each elementary processor is connected by at least two data communication networks to a neighboring elementary processor.

According to one embodiment, each elementary processor further comprises, for each communication register, a multiplexer connected to neighboring elementary processors according to each of the array's communication axes, this multiplexer comprising means to select data sent by one of these neighboring elementary processors to be copied into this communication register.

In an embodiment, each communication register of an elementary processor is able to copy the following data at each operation cycle:
- the data of an internal register in this elementary processor,
- the data of a register from the same axis of a neighboring elementary processor,
- the data of a register from another axis of a neighboring elementary processor,
- the data contained in this same register before the cycle.

According to one embodiment, where an elementary processor is situated at an edge of the array, a neighboring processor is situated at another edge of the array.

Other characteristics and advantages of the invention will emerge with the description made below as an example, which is descriptive and non-restrictive, and refers to the figures herein where:
- Figure 1, described previously, schematically represents an array processor according to prior art,
- Figure 2, described previously, schematically represents an array of elementary processors and its mesh network for data transmission according to prior art,
- Figure 3 schematically represents an array of elementary processors compliant with the invention, and
- Figure 4 is a diagram of the communication means of an elementary processor according to the invention.

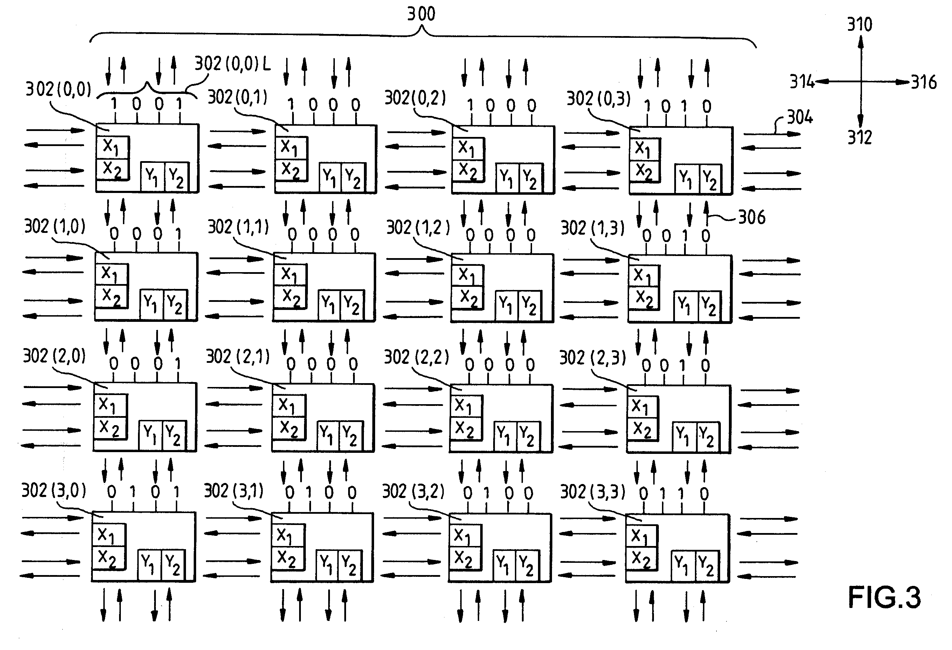

In the embodiment of the invention described below (Figure 3), each elementary processor has a first set of communication registers, X1 and X2, for communicating in the directions West 314 and East 316 and a second set of communication registers, Y1 and Y2, for communicating in the directions North 310 and South 213.

The set of communication registers for each elementary processor is thus composed of 4 registers, X1, X2, Y1 and Y2. The array processor thus features with a double communication network along the horizontal axis (West 314/ East 316) and the vertical axis (North 310/ South 312).

In a variant of this embodiment, each elementary processor contains 2xn communication registers destined for communication in the n axes of the array, n being a positive integer.

In each set of communication registers of a given elementary processor, the internal register of an elementary processor may take the following data at each clock cycle:
- the data of a second internal register in this elementary processor,
- the data of an X1 or X2 register of a physical neighboring elementary processor or by bypassing, situated at East 316,
- the data of an X1 or X2 register of a physical neighboring elementary processor or by bypassing, situated at West 314,
- the data of an Y1 or Y2 register of a physical neighboring elementary processor or by bypassing, situated at North 310,
- the data of an Y1 or Y2 register of a physical neighboring elementary processor or by bypassing, situated at South 312,
- No change as regards the content of the register before the clock cycle.

At each clock cycle, the array processor's control means (not shown) send a conditional communication instruction to indicate which data must be positioned in each communication register.

For this purpose, each communication instruction sent by the control means has a first "condition" field, a second "first source" field and a third field called the "second source", described in detail below.

The condition field is comprised of four bits, that is, one bit for the North edge, one bit for the South edge, one bit for the East edge and one bit for the West edge.

The condition contained in the condition field is validated by an elementary processor if the elementary processor is positioned on one of the edges that are indicated by the condition's activated bits. If more than one of the condition bits are enabled an "OR" function is implemented between the two comparisons with the position of the elementary processor to validate or not validate the condition.

If the condition in the condition field is validated by a given elementary processor, then the "first source" field identifies a second elementary processor whose data should be copied into the relevant register of the first elementary processor.

If the condition in the condition field is not validated by a given elementary processor, then the "second source" identifies the source that should be copied in the relevant elementary processor's register.

Figure 3 shows a diagram of an example of an array 300 containing 16 elementary processors 302 (i,j), such that i and j are between 0 and 3, in compliance with the invention.

Each processor 302(i,j) has two registers, X1 and X2, for communication on the West 314-East 316 axis and two registers, Y1 and Y2 on the North 310 - South 312 axis.

In addition each register can import or export data via the mesh communication network represented by the horizontal arrows 304 and the vertical arrows 306. Each elementary processor is in communication with 4 neighboring elementary processors (with or without bypassing): 1 in the North, 1 in the South, 1 in the East and 1 in the West.

For example, the elementary processor 302(0,0) can communicate with:
- i ts X1 and X2 communication registers in read and write mode with the elementary processor 302(0,3) and the elementary processor 302(0,1),
- its Y1 and Y2 communication registers in read and write mode with the elementary processor 302(3,0) and the elementary processor 302(1,0).

A 4-bit location word is associated with each elementary processor. In figure 3, all the 4-bit words associated to each elementary processor are indicated (only the word 302(0,0)L is referenced for clarity), such that:
- the first bit is equal to 1 if the given elementary processor is on the North edge and 0, otherwise,
- the second bit is equal to 1 if the given elementary processor is on the South edge and 0, otherwise,
- the third bit is equal to 1 if the given elementary processor is on the East edge and 0, otherwise,
- the fourth bit is equal to 1 if the given elementary processor is on the West edge and 0 otherwise.
   This association of four-bit words with each elementary processor can be implemented by four wires that are powered up or not according to the location of the elementary processor when the SIMD array processor is powered up, and whose voltage no longer varies until the SIMD array processor is powered down.
- The elementary processors that satisfy the condition North 310, situated at the edge of the array, are the elementary processors 302(0,0), 302(0,1), 302(0,2), 302(0,3),
- The elementary processors that satisfy the condition South 312, situated at the edge of the array, are the elementary processors 302(3,0), 302(3,1), 302(3,2), 302(3,3),
- The elementary processors that satisfy the condition East 316, situated at the edge of the array, are the elementary processors 302(0,3), 302(1,3), 302(2,3), 302(3,3) and
- The elementary processors that satisfy the condition West 314, situated at the edge of the array, are the elementary processors 302(0,0), 302(1,0), 302(2,0), 302(3,0).

The conditions may be combined with the logical "OR" function. For example, the elementary processors that satisfy the condition North and West (North or West should be understood) are the elementary processors 302(0,0), 302(0,1), 302(0,2), 302(0,3), 302(1,0), 302(2,0), 302(3,0).

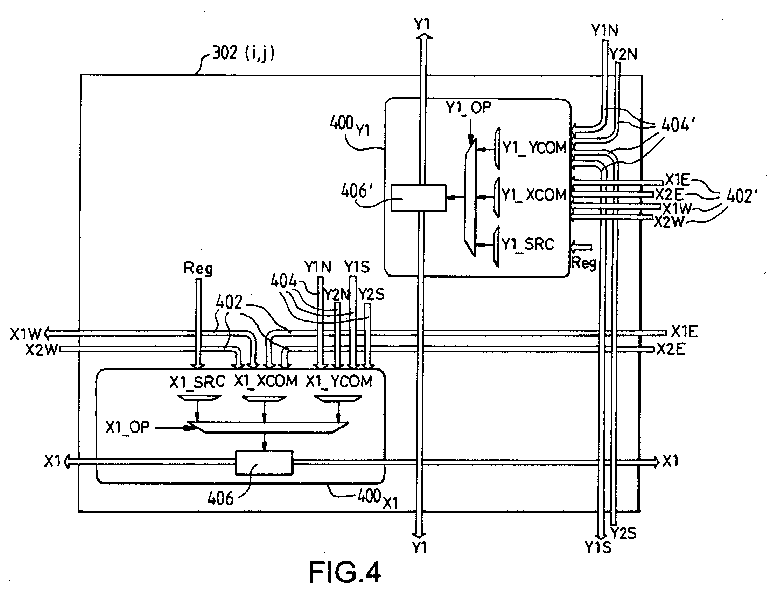

Figure 4 shows a detail of one of these elementary processors 302(i,j) described in figure 3, whose communication modes associated to its registers X1, X2, Y1 and Y2 are such that each of these registers can take send or receive data as regards any other register X1', X2', Y1' and Y2' of a neighboring elementary processor 302(i,j).

For this purpose, if one considers for example the X1 register, this uses a multiplexer 400_{X1} containing two sub-registers X1_XCOM and X1_YCOM, in which data, possibly sent by a neighboring elementary processor 302'(i,j) either via a register communication network X1 or X2, or a register communication network Y1 or Y2, are saved.

Hence, the sub-register X1_XCOM contains links 402 specific to the X1 network data, East (E) or West (W) and to the X2 network data, East (E) or West (W), such that it can store the data from each of these links with the neighboring elementary processors.

In a similar manner, the sub-register X1_YCOM contains links 404 specific to the Y1 network data, North (N) or South (S), and to the Y2 network data, North (N) or South (S), such that it can store the data from each of these links with the neighboring elementary processors.

Finally, a third sub-register X1_SRC is used to store, for use in a new cycle, data already contained in the X1 register of the elementary processor 302(i,j) itself.

Hence, it appears that, considering the location condition (represented by X1_OP) sent by the control means (not shown) of the array, the multiplexer 400_{X1} can integrate data from an X1, X2, Y1, Y2 network or already contained in the elementary processor by a simple selection.

The data integrated in the X1 register for the computation cycle is subsequently sent to the X1 network by means 406 associated to the latter.

For this purpose, it should be noted that these means 406 allow data to be sent in the East and West directions.

In a similar manner, the detail of the communication means associated with the Y1 register is shown, this uses a multiplexer 400_{Y1} containing two sub-registers Y1_XCOM and Y1_YCOM, in which any data sent by a neighboring elementary processor 302'(i,j), either via a register communication network X1 or X2, or a register communication network Y1 or Y2, are saved.

The operation of these sub-registers is similar to the operation of the sub-registers described previously, the sub-register Y1_XCOM contains links 402' specific to the data in the X1 network, East (E) or West (W) and X2 network, East (E) or West (W), and the register Y1_YCOM contains links 404' specific to the data in the Y1 network, North (N) or South (S), and Y2 network, North (N) or South (S), while a third sub-register Y1_SRC is used to store, for use in a new cycle, data already contained in the Y1 register of the elementary processor 302(i,j) itself.

Henceforth, according to the location condition (represented by Y1_OP) sent by the control means (not shown) of the array, the multiplexer 400_{Y1} can integrate data from an X1, X2, Y1, Y2 network or already contained in the elementary processor by simple selection.

Subsequently, the data integrated in the Y1 register for the computation cycle is sent to the X1 network by means 406' associated with the latter, these means 406' allow data to be sent in the North and South directions.

The X2 and Y2 registers contain the same communication means based on multiplexers as those described for the X1 and Y1 registers. However, they are not represented in figure 4 for the sake of simplification.

## Claims

1. Method for managing data in an array processor comprising elementary processors (302 (i,j), (302 (i',j')) forming an array (300) of n axes such that each elementary processor (302 (i,j)) is connected to neighboring elementary processors (302 (i',j')) according to each of the 2n directions (310, 312, 314, 316) of the array (300), each elementary processor being controlled by identical instructions determining the neighboring elementary processor (302 (i',j')) that should send data to this elementary processor (302 (i,j)) for a subsequent cycle, **characterized in that** communication registers (X1, X2, Y1, Y2) dedicated to data exchange according to each axis of the array (300) are associated with this elementary processor (302 (i,j)) and **in that** a condition of location of the elementary processor (302 (i,j)) in the array (300) is integrated in each instruction to determine the neighboring elementary processor (302 (i',j')) sending data for a subsequent cycle.

2. Array processor (300) comprising elementary processors (302 (i,j), (302 (i',j')), forming an array (300) of n axes such that each elementary processor (302 (i,j)) is connected to neighboring elementary processors (302 (i',j')) according to each of the 2n directions (310, 312, 314, 316) of the array (300), each elementary processor being controlled by identical instructions determining the neighboring elementary processor that should send data to this elementary processor (302 (i,j)) for a subsequent cycle, **characterized in that**
each elementary processor (302 (i,j)) contains communication registers (X1, X2, Y1, Y2) dedicated to data exchange according to each axis of the array, and **in that**
each elementary processor (302 (i,j)) is able to receive from control means instructions containing a condition of location of the elementary processor (302 (i,j)) in the array (300) to determine the data to be sent to each of its communication register (X1, X2, Y1, Y2) for a subsequent cycle.

3. Array processor according to claim 2, **characterized in that** each elementary processor (302 (i,j)) is assigned a series of bits (302 (i,j)L) identifying its position in the array (300) so as to determine the location of the elementary processor (302 (i,j)) by comparing this series (302 (i,j)L) of bits with a series of bits received in the instructions.

4. Array processor according to claim 3, **characterized in that** the series (302 (i,j)L) of bits identifying the position of an elementary processor (302 (i,j)) in the array (300) is a series of 2n bits indicating for each elementary processor (302 (i,j)) whether this elementary processor (302 (i,j)) is at an edge of the array (300).

5. Array processor according to one of claims 2, 3 or 4, **characterized in that** the array comprises two axes and four directions (310, 312, 314, 316).

6. Array processor according to one of claims 3 to 5, **characterized in that** each elementary processor (302 (i,j)) is assigned four electrical elements whose voltage is set when the elementary processor (302 (i,j)) is powered up and remains set while the elementary processor (302 (i,j)) is enabled, the voltage of these four elements providing the series (302 (i,j)L) of bits indicating the position of the elementary processor (302 (i,j)) in the array (300).

7. Array processor according to one of the previous claims, **characterized in that** the instructions received from the control means contain:
- a first identity of an elementary processor whose data should be copied into a communication register of the elementary processor (302 (i,j)) if the location condition is validated, and
- a second identity of an elementary processor, whose data should be copied if the location condition is not validated.

8. Array processor according to one of the previous claims, **characterized in that** the communication registers (X1, X2, Y1, Y2) of each elementary processor are independent.

9. Array processor according to one of the previous claims, **characterized in that** each elementary processors (302 (i,j)) contains at least two communication registers ((X1, X2); (Y1, Y2)) dedicated to data exchange according to an axis of the array such that, according to this axis, each elementary processor (302 (i,j)) is connected by at least two data communication networks to a neighboring elementary processor (302 (i',j')).

10. Array processor according to claim 9, **characterized in that** each elementary processor (302 (i,j)) further comprises, for each communication register ((X1, X2); (Y1, Y2)), a multiplexer (400_{X1}, 400_{Y1}) connected to neighboring elementary processors (302 (i',j')) according to each of the array's (300) communication axes, wherein this multiplexer contains means such as sub-registers (Y1_SRC, Y1_XCOM, Y1_YCOM, X1_SRC, X1_XCOM, X1_YCOM), to select data sent by one of these neighboring elementary processors (302 (i',j')) to be copied into this communication register.

11. Array processor according to one of the previous claims, **characterized in that** each communication register (X1, X2, Y1, Y2) of an elementary processor is able to copy the following data at each operation cycle:
- the data of an internal register in this elementary processor,
- the data of a register from the same axis of a neighboring elementary processor,
- the data of a register from another axis of a neighboring elementary processor,
- the data contained in this same register before the cycle.

12. Array processor according to one of the previous claims, wherein an elementary processor (302 (i,j)) being situated at an edge of the array, a neighboring processor (302 (i',j')) is situated at another edge of the array.
